# EUROPÄISCHE PATENTSCHRIFT

(11) **EP 0 844 137 B1**
(45) Veröffentlichungstag und Bekanntmachung des Hinweises auf die Patenterteilung: **06.10.2004**
(21) Anmeldenummer: 97119757.9
(22) Anmeldetag: 12.11.1997
(51) Int. Cl.: B60R 21/045

(54) **Zur Befestigung in einem vorderen Bereich einer Fahrgastzelle eines Kraftfahrzeuges vorgesehener Aufprallschutz**
Impact protection provided to be fixed to the forward section of a motor vehicle passenger compartment
Protection de choc à rapporter dans la partie avant de l'habitacle d'un véhicule à moteur

(30) Priorität: 13.11.1996 DE 19646776
(43) Veröffentlichungstag der Anmeldung: 27.05.1998
(73) Patentinhaber: Siemens Aktiengesellschaft, 80333 München (DE)
(72) Erfinder: Schmiedl, Walter, 60437 Frankfurt (DE); Jeffery, William, 69514 Laudenbach (DE); Döhring, Klaus, 63741 Aschaffenburg (DE); Krystetzko, Heinz, 64390 Erzhausen (DE)

(56) Entgegenhaltungen:
- EP-A- 0 738 576
- US-A- 4 786 540
- US-A- 4 898 764
- US-A- 5 043 114
- US-A- 5 370 417

## Beschreibung

Die Erfindung betrifft einen zur Befestigung in einem vorderen Bereich einer Fahrgastzelle eines Kraftfahrzeuges vorgesehenen Aufprallschutz mit einem bei einem Aufprall eines Knies eines Insassens des Kraftfahrzeuges plastisch verformbaren Dämpfungskörper.

Bei einem aus der Praxis bekannten Aufprallschutz ist ein dünnwandiges Profil aus Blech als Dämpfungskörper vorgesehen, welcher an seinem in die Fahrgastzelle hineinragenden Bereich gerundet und mit einer Polsterung versehen ist. Das Profil stützt sich über deformierbare Halteteile an Karosserieteilen des Kraftfahrzeuges ab. Bei einem Crash des Kraftfahrzeuges verhindert dieser Aufprallschutz Knieverletzungen der Insassen. Das Profil ist im wesentlichen rohrförmig gestaltet.

Nachteilig hierbei ist, daß der aus Blech gefertigte Dämpfungskörper zur Vermeidung von punktuellen Belastungen der Knie der Insassen große Abmessungen aufweisen muß. Die Abmessungen des Aufprallschutzes werden durch die Polsterung zusätzlich erhöht.

Dokument US 5 043 114 A offenbart einen gattungsgemäßen Aufprallschutz.

Der Erfindung liegt das Problem zugrunde, einen Aufprallschutz der eingangs genannten Art so zu gestalten, daß er besonders einfach zu fertigen ist und einen möglichst geringen Platzbedarf hat.

Dieses Problem wird erfindungsgemäß dadurch gelöst, daß der Dämpfungskörper aus einem polymeren Schaumstoff gefertigt und von einer Außenhaut aus einem nachgiebigen und reißfesten Kunststoff überzogen ist, wobei der Dämpfungskörper Versorgungsleitungen aufweist.

Durch diese Gestaltung hat der Aufprallschutz eine dünne Außenhaut, hinter der als Dämpfungskörper ein plastisch verformbarer Kern aus Kunststoff angeordnet ist. Bei einem Crash setzt die Außenhaut den Knien der Insassen einen wesentlich geringeren punktuellen Widerstand entgegen, als das Profil des bekannten Aufprallschutzes. Der erfindungsgemäße Aufprallschutz muß deshalb die Knie der Insassen nicht so großflächig abstützen wie das Profil des bekannten Aufprallschutzes. Daher kann man dank der Erfindung mit sehr geringen Abmessungen einen besonders hohen Schutz der Knie der Insassen erreichen. Der Schaumstoff-Dämpfungskörper kann dabei nicht nur eine Dämpfungsfunktion übernehmen, sondern auch (Klemm-)Haltefunktionen ausführen. Der erfindungsgemäße Aufprallschutz besteht im wesentlichen aus zwei Kunststoffbauteilen und ist daher, insbesondere in einer Serienfertigung, besonders einfach und kostengünstig zu fertigen. Die Außenhaut schützt insbesondere den Dämpfungskörper während des Normalbetriebes des Kraftfahrzeuges vor einer Beschädigung und erzeugt eine glatte Oberfläche des Aufprallschutzes. Dadurch, daß der Dämpfungskörper Versorgungsleitungen aufweist, läßt sich die Teilevielfalt reduzieren, der Montageaufwand verringern und ein optimaler Verlauf der Versorgungsleitungen realisieren.

Der erfindungsgemäße Aufprallschutz mit dem Merkmalen des Anspruchs 1 eignet sich zur besonders einfachen Aufnahme von elektrischen Leitungen oder von Lüftungskanälen, wenn der Dämpfungskörper eine im wesentlichen als Rinne ausgebildete Ausnehmung aufweist. Die Gestaltung der Ausnehmung als Rinne hat den Vorteil, daß sich der Dämpfungskörper sehr einfach in einer kernlosen Form aufschäumen läßt. Die Gefahr einer Beschädigung der in dem Aufprallschutz verlegten elektrischen Leitungen durch ein Scheuern untereinander oder an dem Dämpfungskörper läßt sich beispielsweise durch die Breite oder durch eine mäanderförmige Führung der Ausnehmung vermindern. Hierfür sind keine zusätzlich zu montierenden Halteelemente für die Leitungen erforderlich.

Die Außenhaut könnte beispielsweise von einer über den Dämpfungskörper gespannten Kunststoffolie gebildet sein. Eine solche Kunststoffolie hat jedoch keine Eigenstabilität, so daß die äußere Form des Aufprallschutzes von dem unter der Außenhaut befindlichen Dämpfungskörper erzeugt wird. Die Außenhaut ermöglicht gemäß einer anderen vorteilhaften Weiterbildung der Erfindung eine von der Form des Dämpfungskörpers unabhängige Gestaltung der Oberfläche des Aufprallschutzes, wenn die Außenhaut als Kunststoffgehäuse ausgebildet ist. Ein weiterer Vorteil dieser Gestaltung besteht darin, daß sich in ein solches Kunststoffgehäuse sehr einfach elektrische Schalter oder Belüftungsklappen einsetzen lassen. Das Kunststoffgehäuse kann beispielsweise aus einem ca. 1,5 mm dicken Kunststoff im Spritzgießverfahren hergestellt werden. Wichtig ist, daß die Außenhaut bei der maximal möglichen Verformung des Aufprallschutzes keine scharfen Kanten bildet.

Der Dämpfungskörper ist gemäß einer anderen vorteilhaften Weiterbildung der Erfindung besonders einfach zu fertigen, wenn die Ausnehmung in einem an die Außenhaut angrenzenden Bereich in dem Dämpfungskörper angeordnet ist. Hierbei entsteht der Hohlraum automatisch nach einem Verbinden des Dämpfungskörpers mit der Außenhaut. Dieser Hohlraum eignet sich beispielsweise als Lüftungskanal.

Die elektrischen Leitungen lassen sich gemäß einer anderen vorteilhaften Weiterbildung der Erfindung einfach hinter dem Aufprallschutz verlegen, wenn die Ausnehmung in einem an der Rückseite des Dämpfungskörpers angeordneten Trägerelement angrenzt.

Der Aufprallschutz läßt sich gemäß einer anderen vorteilhaften Weiterbildung der Erfindung besonders schnell an dem Trägerelement befestigen, wenn die Außenhaut zur Befestigung an dem Trägerelement mehrere nach hinten weisende Materialzungen aufweist.

Die plastische Verformbarkeit des Dämpfungskörpers verändert sich durch die Ausnehmung nur unwesentlich, wenn der Dämpfungskörper mehrere in die Ausnehmung hineinragende Querstege aufweist. Von den Querstegen werden in der Ausnehmung anzuordnende elektrische Leitungen gegen ein hinter dem Aufprallschutz anzuordnendes Trägerelement gedrückt und damit ein Scheuern der Leitungen untereinander oder an der Wandung der Ausnehmung verhindert.

Der Dämpfungskörper ist gemäß einer anderen vorteilhaften Weiterbildung der Erfindung besonders kostengünstig herstellbar, wenn er aus Polystyrol gefertigt ist. Weiterhin verfügt dieses Material über eine sehr gute Wärmeisolation, so daß in der Ausnehmung strömende warme oder kalte Luft nahezu keine Temperaturänderung erfährt.

Der Aufprallschutz hat gemäß einer anderen vorteilhaften Weiterbildung der Erfindung ein besonders geringes Gewicht, wenn der Dämpfungskörper aus Polyurethan gefertigt ist.

Vorzugsweise sind die Versorgungsleitungen Luftkanäle und/oder elektrische Leitungen. Gerade bei Luftkanälen erweist es sich als besonders günstig, daß der Dämpfungskörper aus einem Schaumstoff gefertigt ist und sich so Zu- und Abgangskanäle (z. B. zu Luftaustritten in einer Armaturentafel) leicht bei der Herstellung des Körpers, ein einziges Bauteil bildend gestalten lassen.

Die Montage des Aufprallschutzes mit den elektrischen Leitungen gestaltet sich gemäß einer anderen vorteilhaften Weiterbildung der Erfindung besonders einfach, wenn in dem Dämpfungskörper verlegte Leitungen von dem Kunststoff ummantelt sind. Hierdurch sind die elektrischen Leitungen als Teil des Aufprallschutzes ausgebildet und müssen deshalb nicht separat verlegt werden. Die elektrischen Leitungen können zur weiteren Verbindung beispielsweise an der Oberfläche des Dämpfungskörpers Anschlußkontakte aufweisen.

Bei einem Aufprall der Insassen des Kraftfahrzeuges mit den Knien auf den Aufprallschutz werden die auftretenden Kräfte gemäß einer anderen vorteilhaften Weiterbildung der Erfindung zuverlässig von dem Dämpfungskörper aufgenommen, wenn das Trägerelement im wesentlichen senkrecht zu einer vorgesehenen Krafteinleitung durch die Fahrzeuginsassen angeordnet ist.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: einen Längsschnitt durch einen mittleren Bereich eines Kraftfahrzeuges mit einem darin angeordneten Aufprallschutz,
- Fig.2: den Aufprallschutz aus Fig.1 in einer perspektivischen Darstellung,
- Fig.3: eine weitere Ausführungsform eines Aufprallschutzes vor einer Montage an einem Trägerelement,
- Fig.4: den Aufprallschutz aus Figur 3 in einer Schnittdarstellung nach der Montage.

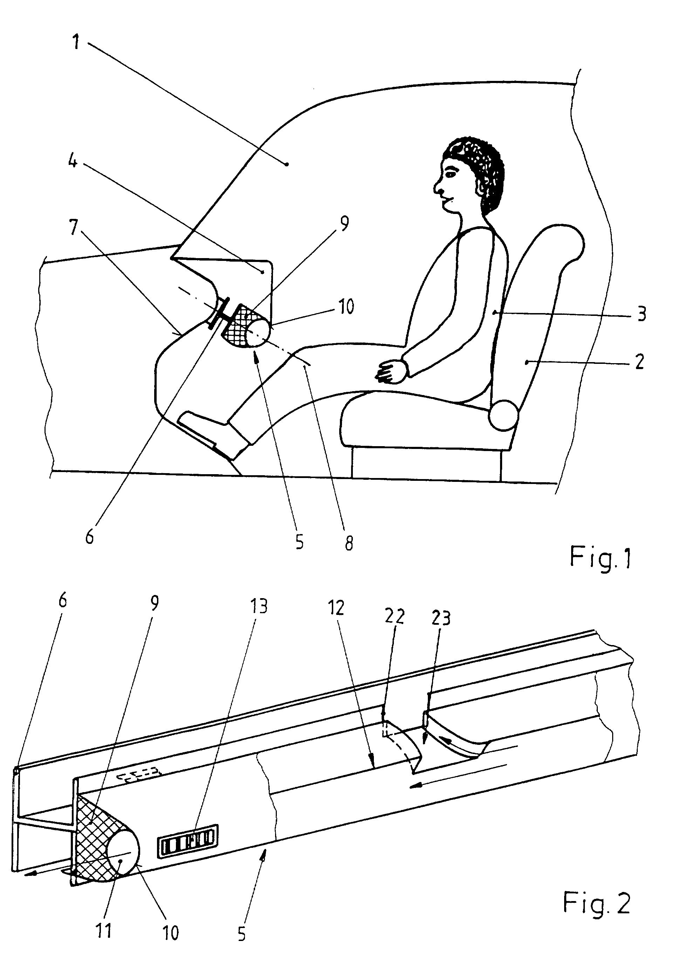

Die Figur 1 zeigt in einer schematischen Darstellung einen Innenraum 1 eines Kraftfahrzeuges mit einem darin angeordneten Sitz 2, auf dem eine Person 3 sitzt, und mit einem Armaturenbrett 4. Das Armaturenbrett 4 grenzt nach unten hin an einem Aufprallschutz 5 an, der über ein Trägerelement 6 an einem Karosserieblech 7 des Kraftfahrzeuges befestigt ist.

Bei einem Crash des Kraftfahrzeuges wird die in dem Sitz 2 befindliche Person 3 nach vorne geschleudert. Hierbei bewegen sich ihre Knie 8 entlang der strichpunktiert eingezeichneten Linie gegen den Aufprallschutz 5. Der Aufprallschutz 5 wandelt die hierbei entstehende Aufprallenergie in Verformungsenergie um und verhindert damit schwere Verletzungen der Person 3.

Der Aufprallschutz 5 hat einen an dem Trägerelement 6 befestigten Dämpfungskörper 9, der von einer Außenhaut 10 überzogen ist. Der Aufbau des Aufprallschutzes 5 ist in Figur 2 gezeigt. Zur Verdeutlichung von in dem Dämpfungskörper 9 befindlichen Ausnehmungen 11 ist die Außenhaut 10 hierbei teilweise aufgeschnitten dargestellt. Die Ausnehmung 11 hat eine sich über die gesamte Länge des Dämpfungskörpers 9 erstreckende Rinne 12 und dient damit als Lüftungskanal. In der Außenhaut 10 ist eine Belüftungsklappe 13 eingesetzt. Auch eine Öffnung 22 eines von der Rinne 12 abzweigenden Kanals 23 dient der Belüftung. Die Ausnehmung 11 befindet sich zwischen dem Dämpfungskörper 9 und der Außenhaut 10. Zur Herstellung kann der Dämpfungskörper 9 damit sehr einfach in einer kernlosen Form aufgeschäumt werden.

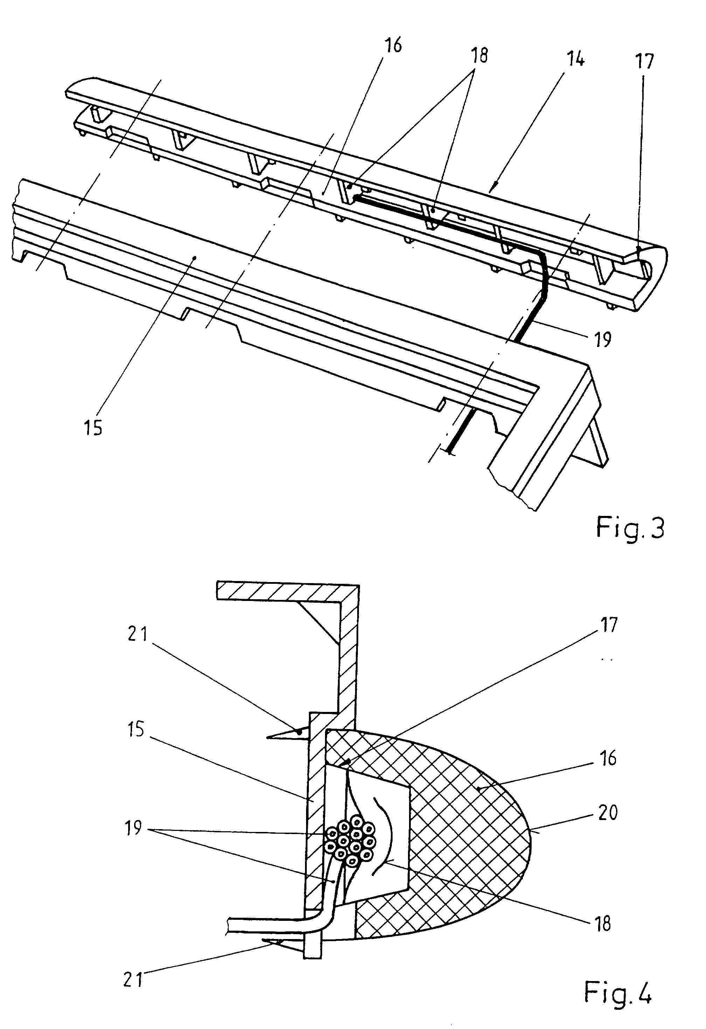

Die Figur 3 zeigt einen Aufprallschutz 14 vor einer Montage an einem Trägerelement 15. Der Aufprallschutz 14 hat einen Dämpfungskörper 16 mit einer sich über seine gesamte Rückseite erstreckenden Ausnehmung 17. In der Ausnehmung 17 sind mehrere Querstege 18 angeordnet. Die Ausnehmung 17 dient der Aufnahme einer Vielzahl elektrischer Leitungen 19. In Figur 4 ist zu erkennen, daß im montierten Zustand des Aufprallschutzes 14 die elektrischen Leitungen 19 von den Querstegen 18 gegen das Trägerelement 15 gedrückt und so ohne zusätzliche Elemente befestigt werden. Hierdurch wird ein Scheuern der elektrischen Leitungen 19 untereinander und an dem Dämpfungskörper 16 verhindert. Eine den Dämpfungskörper 16 überziehende Außenhaut 20 hat mehrere nach hinten weisende Materialzungen 21, mit denen der Aufprallschutz 14 an dem Trägerelement 15 befestigt ist.

## Patentansprüche

1. Zur Befestigung in einem vorderen Bereich einer Fahrgastzelle eines Kraftfahrzeuges vorgesehener Aufprallschutz (5) mit einem bei einem Aufprall eines Knies eines Insassen des Kraftfahrzeuges plastisch verformbaren, aus einem polymeren Schaumstoff gefertigten Dämpfungskörper (9, 16), der von einer Außenhaut (10, 20) aus einem nachgiebigen und reißfesten Kunststoff überzogen ist und der in seinem Inneren eine durch eine Ausnehmung (11, 17) im Schaumstoff des Dämpfungskörpers (9, 16) gebildete Rinne (12) aufweist, **dadurch gekennzeichnet, dass** die Rinne (12) beim fertigen Aufprallschutz (5) zumindest weitgehend unausgefüllt ist und unmittelbar automatisch nach einem Verbinden des Dämpfungkörpers mit der Außenhaut einen Luftkanal bildet und/oder ohne zusätzliche zu montierende Halteelemente zur Aufnahme von elektrischen Leitungen (19) dient.

2. Aufprallschutz nach Anspruch 1, **dadurch gekennzeichnet, dass** die Ausnehmung (11, 17) in einem an die Außenhaut (10, 20) angrenzenden Bereich in dem Dämpfungskörper (9, 16) angeordnet ist.

3. Aufprallschutz nach Anspruch 1, **dadurch gekennzeichnet, dass** die Ausnehmung (11, 17) in einem an der Rückseite des Dämpfungskörpers (9, 16) angeordneten Trägerelement (6, 15) angrenzt.

4. Aufprallschutz nach zumindest einem der vorhergehenden Ansprüche, **dadurch gekennzeichnet, dass** die Außenhaut (10, 20) zur Befestigung an dem Trägerelement (6, 15) mehrere nach hinten weisende Materialzungen (21) aufweist.

5. Aufprallschutz nach zumindest einem der vorhergehenden Ansprüche, **dadurch gekennzeichnet, dass** der Dämpfungskörper (9, 16) mehrere in die Ausnehmung (17) hineinragende Querstege (18) aufweist.

6. Aufprallschutz nach zumindest einem der vorhergehenden Ansprüche, **dadurch gekennzeichnet, dass** der Dämpfungskörper (9, 16) aus Polystyrol gefertigt ist.

7. Aufprallschutz nach zumindest einem der vorhergehenden Ansprüche, **dadurch gekennzeichnet, dass** der Dämpfungskörper (9, 16) aus Polyuretan gefertigt ist.

8. Aufprallschutz nach zumindest einem der vorhergehenden Ansprüche, **dadurch gekennzeichnet, dass** die in dem Dämpfungskörper (9, 16) verlegten elektrischen Leitungen von dem Kunststoff ummantelt sind.

9. Aufprallschutz nach zumindest einem der vorhergehenden Ansprüche, **dadurch gekennzeichnet, dass** das Trägerelement (6, 15) im Wesentlichen senkrecht zu einer vorgesehenen Krafteinleitung durch die Fahrzeuginsassen angeordnet ist.

## Claims

1. Impact protection system (5) provided for fixing in a front region of a passenger cell of a motor vehicle, having a damping body (9, 16) which can be deformed plastically when a motor vehicle occupant's knee impacts against it, is manufactured from a polymeric foam, is covered by an outer skin (10, 20) of flexible and tear-resistant plastic and has, in its interior, a channel (12) which is formed in the foam of the damping body (9, 16) by a recess (11, 17), **characterized in that**, in the finished impact protection system (5), the channel (12) is at least largely unfilled and forms an air duct immediately and automatically after the damping body is connected to the outer skin, and/or serves to accommodate electric lines (19) without additional retaining elements having to be fitted.

2. Impact protection system according to Claim 1, **characterized in that** the recess (11, 17) is arranged in a region in the damping body (9, 16) that is adjacent to the outer skin (10, 20).

3. Impact protection system according to Claim 1, **characterized in that** the recess (11, 17) is adjacent in a support element (6, 15) arranged on the rear side of the damping body (9, 16).

4. Impact protection system according to at least one of the preceding claims, **characterized in that** the outer skin (10, 20) has a plurality of rearwardly pointing material tongues (21) for fixing it on the support element (6, 15).

5. Impact protection system according to at least one of the preceding claims, **characterized in that** the damping body (9, 16) has a plurality of transverse webs (18) protruding into the recess (17).

6. Impact protection system according to at least one of the preceding claims, **characterized in that** the damping body (9, 16) is manufactured from polystyrene.

7. Impact protection system according to at least one of the preceding claims, **characterized in that** the damping body (9, 16) is manufactured from polyurethane.

8. Impact protection system according to at least one of the preceding claims, **characterized in that** the electric lines which are laid in the damping body (9, 16) are sheathed by the plastic.

9. Impact protection system according to at least one of the preceding claims, **characterized in that** the support element (6, 15) is arranged essentially perpendicularly with respect to a designated force application by the vehicle occupants.

## Revendications

1. Protection de choc (5) à rapporter dans la partie avant de l'habitacle d'un véhicule à moteur munie d'un corps amortisseur (9, 16) fabriqué en mousse polymère, déformable plastiquement en cas de choc d'un genou d'un passager du véhicule à moteur, lequel corps amortisseur est revêtu d'une peau extérieure (10, 20) en une matière synthétique molle ou résistante à la déchirure et qui présente à l'intérieur un conduit (12) formé par un évidement (11, 17) dans la mousse du corps amortisseur (9, 16), **caractérisé en ce que** le conduit (12) est au moins non rempli dans une large mesure,la protection de choc (5) étant finie et forme automatiquement et directement après un raccordement du corps amortisseur à la peau extérieure, une conduite d'air et/ou qui sert, sans éléments de retenue supplémentaires à monter, à loger des câbles électriques (19).

2. Protection de choc selon la revendication 1, **caractérisée en ce que** l'évidement (11, 17) est disposé d ans le corps a mortisseur (9, 16) dans une zone adjacente à la peau extérieure (10, 20).

3. Protection de choc selon la revendication 1, **caractérisée en ce que** l'évidement (11, 17) est adjacent dans un élément porteur (6, 15) disposé à la face arrière du corps amortisseur (9, 16).

4. Protection de choc selon au moins l'une des revendications précédentes, **caractérisée en ce que** la peau extérieure (10, 20) à rapporter à l'élément porteur (6, 15) présente plusieurs languettes de matière (21) dirigées vers l'arrière.

5. Protection de choc selon au moins l'une des revendications précédentes, **caractérisée en ce que** le corps amortisseur (9, 16) présente plusieurs entretoises (18) pénétrant dans l'évidement (17).

6. Protection de choc selon au moins l'une des revendications précédentes, **caractérisée en ce que** le corps amortisseur (9, 16) est fabriqué en polystyrène.

7. Protection de choc selon au moins l'une des revendications précédentes, **caractérisée en ce que** le corps amortisseur (9, 16) est fabriqué en polyuréthanne.

8. Protection de choc selon au moins l'une des revendications précédentes, **caractérisée en ce que** les câbles électriques posés dans le corps amortisseur (9, 16) sont gainés de matière synthétique.

9. Protection de choc selon au moins l'une des revendications précédentes, **caractérisée en ce que** l'élément porteur (6, 15) est disposé sensiblement à la verticale d'une induction, prévue, de forces par les passagers.
